Europäisches Patentamt

European Patent Office

Office européen des brevets

(11) Numéro de publication : **0 015 192**
**B1**

(12) **FASCICULE DE BREVET EUROPÉEN**

(51) Int. Cl.³ : **F 16 K 17/30, B 60 T 17/22**

(45) Date de publication du fascicule du brevet :
**21.10.81**

(21) Numéro de dépôt : **80400212.9**

(22) Date de dépôt : **13.02.80**

(54) Valve de sécurité pour circuits de commande à dépression.

(30) *Priorité :* **14.02.79 IT 2017679**

(43) Date de publication de la demande :
**03.09.80 (Bulletin 80/18)**

(45) Mention de la délivrance du brevet :
**21.10.81 Bulletin 81/42**

(84) Etats contractants désignés :
**CH DE FR GB NL SE**

(56) Documents cités :
**DE - A1 - 2 558 844**
**DE - B2 - 2 358 612**

(73) Titulaire : **BENDITALIA S.p.A.**
**Via Cavalli 53/A**
**I-26013 Crema (IT)**

(72) Inventeur : **Cadeddu, Leonardo**
**Via Piacenza 29/0**
**I-26013 Crema (IT)**

(74) Mandataire : **Poidatz, Emmanuel et al**
**Service Brevets Bendix 44 rue François 1er**
**F-75008 Paris (FR)**

Imprimerie Jouve, 17, rue du Louvre, 75001 Paris, France

EP 0 015 192 B1

Valve de sécurité pour circuits de commande à dépression

L'invention a pour objet une valve de sécurité utilisée dans les circuits de commande à dépression pour isoler une partie de circuit présentant une fuite.

Les circuits de commande à dépression équipant les véhicules modernes sont reliés d'une part à des organes de sécurité tels que des servomoteurs de frein dont la commande est prioritaire, et d'autre part à des systèmes auxiliaires tels que ceux assurant le réglage des phares ou la commande d'un rideau de protection du radiateur contre le gel.

Malheureusement l'apparition d'une fuite dans un des systèmes auxiliaires provoque une baisse du niveau de vide régnant dans l'ensemble du circuit, ce qui risque de compromettre le fonctionnement normal des organes de sécurité.

Pour isoler un système défaillant et permettre ainsi un fonctionnement correct des organes de sécurité, jusqu'à la remise en état dudit système défaillant, l'invention propose une valve de sécurité, caractérisée en ce qu'elle comprend un élément mobile dans une chambre reliée par un orifice d'entrée à un circuit d'utilisation et par un orifice de sortie à un générateur de vide, ledit élément mobile, sensible au flux d'air circulant dans ladite chambre lors de l'apparition d'une fuite, étant relié à un clapet de fermeture disposé en amont de ladite fuite et étant également relié à des moyens d'amortissement, des moyens élastiques sollicitant l'élément mobile dans une position de repos dans laquelle ledit clapet est ouvert, l'élément mobile étant susceptible de venir occuper une deuxième position dans laquelle ledit clapet se trouve fermé sous l'effet du flux d'air traversant la chambre.

Un mode de réalisation préféré de l'invention sera maintenant décrit en référence aux dessins annexés dans lesquels :

La Figure 1 représente un circuit de commande à dépression comportant une valve de sécurité selon l'invention ; et

La Figure 2 est une vue en coupe longitudinale de ladite valve de sécurité.

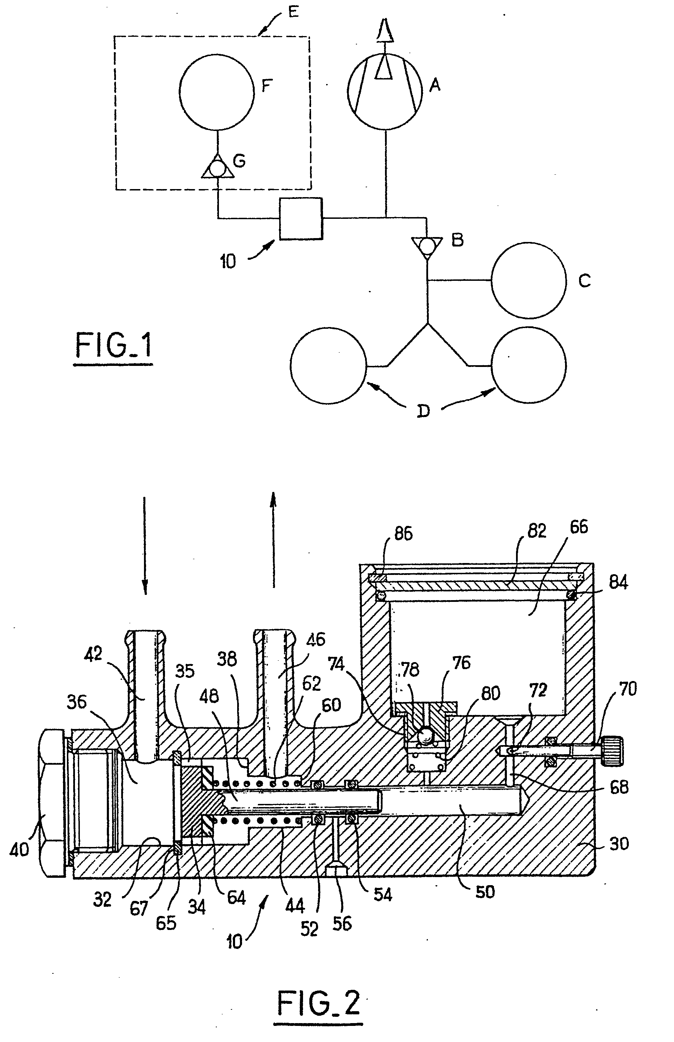

Dans le circuit représenté à la Figure 1, un générateur de vide A est relié au travers d'un clapet de non retour B à un circuit d'utilisation prioritaire comprenant ici un réservoir C et des servomoteurs pneumatiques de freinage D. Le générateur A est également relié à un circuit d'utilisation auxiliaire E comprenant des systèmes auxiliaires F et un clapet de non-retour G. Conformément à l'invention, on a interposé une valve de sécurité 10 entre le générateur A et le circuit d'utilisation E que l'on désire isoler en cas de défaillance.

On décrira maintenant la valve de sécurité 10 représentée à la Figure 2. La valve 10 est constituée d'un boîtier 30 pourvu d'un alésage 32 dans lequel est monté coulissant un disque 34. L'alésage 32 forme une chambre 36 délimitée par la paroi 38 du fond de l'alésage et par un bouchon fileté 40 venant fermer ledit alésage. La chambre 36 est reliée au circuit d'utilisation E par un orifice d'entrée 42 débouchant radialement dans l'alésage 32 à proximité du bouchon 40. Un alésage 44 coaxial à l'alésage 32 s'ouvre dans l'alésage 32 au travers de la paroi 38. La chambre 36 est reliée au générateur de vide A par un orifice de sortie 46 débouchant radialement dans la partie centrale de l'alésage 44.

Le disque 34 est muni à sa périphérie de passages axiaux 35 le traversant. Le disque 34 est également muni d'une tige coaxiale 48. La tige 48 traverse l'alésage 44 et vient coulisser de façon étanche dans un alésage borgne 50 ; l'étanchéité est assurée par deux joints 52 et 54 espacés axialement et entre lesquels est disposé un orifice de drainage 56 débouchant radialement dans l'alésage 50. L'alésage 50 s'ouvre dans l'alésage 44 au niveau de la paroi 60 du fond de l'alésage 44.

Un ressort 62 prenant appui sur la paroi 60 est monté dans l'alésage 44 et se prolonge dans la chambre 36. Le ressort 62 vient solliciter le disque mobile 34 par l'intermédiaire d'un clapet 64 ; le disque 34 étant maintenu ainsi dans une position de repos en butée contre un circlips 65. Le circlips 65 est monté dans un gorge 67 formée dans l'alésage 32.

Le clapet 64 est un disque percé réalisé dans un matériau élastomère, enfilé sur la tige 48 et amené en appui contre le disque 34. Le diamètre extérieur du clapet 64 est supérieur au diamètre de l'alésage 44, et inférieur au diamètre extérieur du disque 34 de façon à ne pas obturer les trous axiaux 35.

De façon à permettre un amortissement du déplacement de la tige 48 dans l'alésage borgne 50, ce dernier est relié à un réservoir cylindrique 66 par un premier conduit 68. Ce conduit 68 débouche radialement dans l'alésage 50 à proximité de l'extrémité borgne de ce dernier. On a prévu des moyens de limitation du débit circulant dans le conduit 68, lesquels consistent en une vis réglable 70 dont l'extrémité formant pointeau 72 pénètre dans le conduit 68. Un deuxième conduit 74 relie le réservoir 66 à l'alésage 50. Un clapet de non retour 76 comprenant une bille 78 et un ressort 80 est disposé de façon classique dans le conduit 74 de façon à permettre une réalimentation rapide de l'alésage 50. Le réservoir 66 est fermé à sa partie supérieure par un couvercle 82 maintenu en appui sur un joint d'étanchéité 84 par un circlips 86. Le réservoir 66 contient un fluide qui est de préférence de l'huile. On a également prévu dans le couvercle 82 un orifice (non représenté) de mise à l'atmosphère du réservoir 66.

On décrira maintenant le fonctionnement de la valve :

Lors de la mise en œuvre du système F, l'air contenu dans le circuit d'utilisation E est aspiré par le générateur de vide A au travers de la valve 10. Un flux d'air traverse la chambre 36 par les trous 35 tout en agissant sur le disque 34 provoquant son déplacement à l'encontre des efforts exercés par le ressort 62. Le déplacement du disque est amorti par l'écoulement limité du fluide contenu dans l'alésage 50 et comprimé par la tige 48. Si le circuit E ne présente pas de fuite, la purge de l'air qu'il contenait initialement est très rapide de sorte que le disque 34 n'a pas le temps de provoquer la fermeture de l'alésage 44 au moyen du clapet 64. Dès que la purge est effectuée le flux d'air cesse de circuler et le disque 34 revient rapidement à sa position de repos grâce au ressort 62 et au conduit de réalimentation rapide 74.

En cas de fuite, le flux d'air agit sur le disque 34 jusqu'à interruption du passage de l'air par le clapet 64 qui vient s'appliquer de façon étanche sur la paroi 60. Tant qu'une différence de pression régnera entre l'orifice d'entrée et l'orifice de sortie le clapet restera en position de fermeture isolant ainsi le circuit défaillant.

**Revendications**

1. Valve de sécurité (10) utilisée dans les circuits de commande à dépression pour isoler une partie de circuit présentant une fuite, caractérisée en ce qu'elle comprend un élément mobile (34) dans une chambre (36) reliée par un orifice d'entrée (42) à un circuit d'utilisation (E) et par un orifice de sortie (46) à un générateur de vide (A), ledit élément mobile (34), sensible au flux d'air circulant dans ladite chambre (36) lors de l'apparition d'une fuite, étant relié à un clapet de fermeture (64) disposé en amont de ladite fuite et étant également relié à des moyens d'amortissement (48, 50, 66, 68, 70, 72), des moyens élastiques (62) sollicitant l'élément mobile (34) dans une position de repos dans laquelle ledit clapet (64) est ouvert, l'élément mobile (34) étant susceptible de venir occuper une deuxième position dans laquelle ledit clapet (64) se trouve fermé sous l'effet du flux d'air traversant la chambre.

2. Valve de sécurité selon la revendication 1, caractérisée en ce que lesdits moyens d'amortissement (48, 50, 66, 68, 70, 72) consistent en un piston (48) coulissant de manière étanche dans un cylindre hydraulique (50) relié à un réservoir d'expansion (66) par un conduit (68) présentant un étranglement (72), éventuellement réglable (70).

3. Valve de sécurité selon la revendication 2, caractérisée en ce que ledit réservoir (66) est relié audit cylindre hydraulique (50) par un autre conduit (74) dans lequel est disposé un clapet de non retour (78) permettant une réalimentation rapide du cylindre (50).

4. Valve de sécurité selon la revendication 2, caractérisée en ce que ledit élément mobile (34) consiste en un disque coaxial audit piston (48) et se déplaçant parallèlement à l'axe de ce dernier dans ladite chambre (36) dont les extrémités sont reliées auxdits orifices d'entrée (42) et de sortie (46).

5. Valve de sécurité selon la revendication 4, caractérisée en ce que ledit clapet (64) est associé au disque constituant l'élément mobile (34) et est susceptible de s'appliquer de façon étanche contre un siège de valve (60) formé à l'une des extrémités de la chambre (36) de façon à obturer l'un desdits orifices (46).

**Claims**

1. Safety valve (10) for use in vacuum control circuits to isolate a portion of circuit in case of leakage thereof, characterized in that it comprises a movable member (34) located in a chamber (36) adapted to be connected on one hand to a service circuit (E) through an inlet port (42) and on the other hand to a vacuum generator (A) through an outlet port (46), said movable member (34), responsive to the air flow crossing said chamber (36) upon occurrence of a leak, being connected to a valve member (64) located upstream said leak and being also connected to a damping means (48, 50, 66, 68, 70, 72), resilient means (62) biasing the movable member (34) towards a rest position in which said valve member (64) is open, the movable member (34) being adapted to shift towards a second position in which said valve member (64) is closed, under the influence of the air flow crossing the chamber (36).

2. Safety valve according to claim 1, characterized in that said damping means (48, 50, 66, 68, 70, 72) comprises a piston (48) slidably and tightly received within a bore (50) connected to a tank (66) by a conduit (68) provided with a restriction (72), possibly of the adjustable type (72).

3. Safety valve according to claim 2, characterized in that said tank (66) is connected to said bore (50) by a second conduit (74) in which is located a non-return valve (78), thereby permitting a quick fill of the bore (50).

4. Safety valve according to claim 2, characterized in that said movable member (34) is a disc coaxial with said piston (48) and adapted to move along the axis of the latter within said chamber (36), the ends of the latter being connected to said inlet (42) and outlet (46) ports.

5. Safety valve according to claim 4, characterized in that said valve (64) is operatively connected to the disc of the movable member (34) and is adapted to engage tightly a valve seat (60) formed at one end of the chamber (36) so as to close one of said ports (46).

**Ansprüche**

1. Sicherheitsventil zur Verwendung in Unterdruck-Servo-Kreisen zum Zwecke eines strömungsmäßigen Abtrennens eines ein Leck enthaltenden Teiles des Servo-Kreises, dadurch gekennzeichnet, daß ein Ventilteil (34) in einer Ventilkammer (36) verlagerbar ist, welche über eine Einlaßöffnung (42) mit einem Lastkreis (E) und über eine Auslaßöffnung (46) mit einer Unterdruckquelle (A) verbindbar ist, daß das verlagerbare Ventilteil (34) einem die Ventilkammer (36) bei Auftreten eines Leckes durchquerenden Luftstrom ausgesetzt ist und mit einem Ventilverschlußteil (64), welches stromauf der Leckstelle angeordnet ist, sowie mit einer Dämpfungseinrichtung (48, 50, 66, 68, 70, 72) verbunden ist, und daß das verlagerbare Ventilteil (34) elastisch nachgiebig (62) in eine Ruhestellung vorgespannt ist, in welcher das Ventilverschlußteil (64) die Offenstellung einnimmt, während es bei Anströmung durch einen die Ventilkammer (36) bei Vorliegen eines Leckes durchsetzenden Luftstrom in eine zweite Stellung bewegbar ist, in welcher das Ventilverschlußteil (64) seine Schließstellung einnimmt.

2. Sicherheitsventil nach Anspruch 1, dadurch gekennzeichnet, daß die Dämpfungseinrichtung (48, 50, 66, 68, 70, 72) einen Kolben (48) aufweist, der strömungsmitteldicht in einem hydraulischen Zylinder (50) verschiebbar ist, welcher seinerseits über eine Leitung (68) mit einem Expansionsbehälter (66) verbunden ist, die eine gegebenenfalls einstellbare (70) Drossel (72) enthält.

3. Sicherheitsventil nach Anspruch 2, dadurch gekennzeichnet, daß der Expansionsbehälter (66) mit dem hydraulischen Zylinder (50) über eine weitere Leitung (74) verbunden ist, in welcher ein Rückschlagventil (78) angeordnet ist, welches ein schnelles Wiederauffüllen des hydraulischen Zylinders (50) gestattet.

4. Sicherheitsventil nach Anspruch 2, dadurch gekennzeichnet, daß das verlagerbare Ventilteil (34) aus einer zum Kolben (48) koaxialen Scheibe besteht und sich in der Ventilkammer (36) parallel zu deren Achse verlagert, wobei die Enden der Ventilkammer mit der Einlaßöffnung (42) bzw. der Auslaßöffnung (46) verbunden sind.

5. Sicherheitsventil nach Anspruch 4, dadurch gekennzeichnet, daß das Ventilverschlußteil (64) der das verlagerbare Ventilteil (34) darstellenden Scheibe zugeordnet ist und strömungsmitteldicht gegen einen Ventilsitz (60) anlegbar ist, welcher bei einem der Enden der Ventilkammer (36) ausgebildet ist, um so eine (46) der Ventilanschlußöffnungen zu verschließen.

**0 015 192**

1/1

E

F

G

A

10

B

C

D

FIG_1

FIG_2

86 82 66 84 42 35 38 46 74 78 76 80 72 70 36 48 62 60 68 40 32 67 34 64 44 54 50 30 65 52 56 10

1